# EUROPÄISCHE PATENTSCHRIFT

(11) **EP 4 284 689 B1**
(45) Veröffentlichungstag und Bekanntmachung des Hinweises auf die Patenterteilung: **05.03.2025**
(21) Anmeldenummer: 22700130.2
(22) Anmeldetag: 06.01.2022
(51) Int. Cl.: B60T 7/22, B60W 30/18

(54) **VERFAHREN ZUM ANNÄHERN EINES FAHRZEUGES AN EINE LADERAMPE, STEUEREINRICHTUNG SOWIE FAHRZEUG**
METHOD FOR HAVING A VEHICLE APPROACH A LOADING RAMP, CONTROL DEVICE, AND VEHICLE
PROCÉDÉ D'APPROCHE PAR UN VÉHICULE D'UNE RAMPE DE CHARGEMENT, DISPOSITIF DE COMMANDE ET VÉHICULE

(30) Priorität: 27.01.2021 DE 102021101787
(43) Veröffentlichungstag der Anmeldung: 06.12.2023
(73) Patentinhaber: ZF CV Systems Global GmbH, 3006 Bern (CH)
(72) Erfinder: GOERS, Andreas, 30982 Pattensen (DE); BARTH, Christoph, 30419 Hannover (DE)
(74) Vertreter: Ohlendorf, Henrike
(86) Internationale Anmeldenummer: PCT/EP2022/050175
(87) Internationale Veröffentlichungsnummer: WO 2022/161749

(56) Entgegenhaltungen:
- EP-A1- 2 489 531
- DE-A1- 10 345 748
- DE-A1- 102005 036 794

## Beschreibung

Die Erfindung betrifft ein Verfahren zum Annähern eines Fahrzeuges an eine Laderampe sowie eine Steuereinrichtung für ein Fahrzeug zur Durchführung des Verfahrens sowie das Fahrzeug mit einer derartigen Steuereinrichtung.

Auf Betriebshöfen sind normalerweise Laderampen angeordnet, an die sich ein Fahrzeug, insbesondere Nutzfahrzeug, zum Beladen oder Entladen bis auf wenige Zentimeter annähert. Bei einer manuellen Steuerung des Fahrzeuges in die Be- bzw. Entladeposition steuert der Fahrer das Fahrzeug so lange rückwärts, bis er einen Bremsruck aufgrund einer rückseitigen Berührung des Fahrzeuges mit der Laderampe spürt. In dieser Be- bzw. Entladeposition wird das Fahrzeug anschließend durch eine manuelle Betätigung des jeweiligen Bremsbetätigungsorgans gehalten.

Die manuelle Annäherung an die Laderampe erfolgt in dem Fall abhängig von der Erfahrung des Fahrers, wobei eine zu hohe Fahrzeug-Geschwindigkeit während einer rückseitigen Berührung zu Beschädigungen am Fahrzeug und/oder an der Laderampe führen können. Um dies abzumildern, sind Laderampen bekannt, die die Energie bei einem Kontakt abfangen und diese in den Untergrund einleiten, um stärkere Beschädigungen sowohl am Fahrzeug als auch am Gebäude zu vermeiden.

Zudem kann für die manuelle Annäherung unterstützend auf Signale eines Positionserfassungssystems, beispielsweise GPS, oder dgl., zurückgegriffen werden, um die Position des Fahrzeuges und damit einen Abstand zwischen dem Fahrzeug und der Laderampe abschätzen zu können. Auch über Signale von rückseitigen Ultraschallsensoren oder Radarsensoren kann ein Abstand zur Laderampe abgeschätzt werden. In DE 10 308 668 A1 ist beispielhaft eine Assistenzfunktion zum Annähern des Fahrzeuges an eine Laderampe mittels Abstandssensoren beschrieben, wobei das Fahrzeug bis auf einen Abstand von Null oder bis auf wenige Zentimeter an die Laderampe angenähert werden kann.

Nachteilig dabei ist, dass die Ermittlung des Abstandes über die genannten Abstandssensoren für gewöhnlich sehr ungenau ist, wenn eine zentimetergenaue Annäherung an die Laderampe benötigt wird. Auch RadDrehzahlsensoren, wie sie in WO 03 051 697 A2 für eine Annäherung an eine Laderampe verwendet werden, sind bei einer derartig geringen Fahrzeug-Geschwindigkeit, wie sie normalerweise bei einer Annäherung eingestellt wird, ebenfalls sehr ungenau. Wird stattdessen auf genauere 3D-Lidar-Sensoren oder rückschauende Kameras für eine Abstandsermittlung ausgewichen, erhöhen sich die Kosten sowie auch der DatenverarbeitungsAufwand im Fahrzeug.

Weiterhin hat der Fahrer bei einer manuellen Kontrolle zum richtigen Zeitpunkt die Bremse zu betätigen, um ein zu starkes Zurückrollen nach einer Berührung mit der Laderampe zu vermeiden. Der manuelle Annäherungsprozess ist daher insgesamt sehr aufwändig und unkomfortabel.

Um den Annäherungsprozess für den Fahrer zu vereinfachen, sind Assistenzsysteme bekannt, die die Bewegung des Fahrzeuges zumindest in longitudinaler Richtung teilweise automatisieren. So sind aus DE 20 2005 008 450 U1, GB 2 177 767 A1, E 2 929 983 A1 und DE 25 13 880 A1 Anfahrpuffer (Bumper) mit integrierten Sensoren bekannt, welche bei einem Kontakt mit einem Gegenstand, beispielsweise der Laderampe, ein Signal auslösen, welches zu einem Abbremsen des Fahrzeuges im Stillstand führt. In DE 10 2013 106 878 A1 ist beschrieben, neben einem Abstandssensor einen zusätzlichen Kontaktsensor zu verwenden, um die Anfahrt eines Fahrzeuges mit Anhänger an eine Laderampe zu vereinfachen. Der Kontaktsensor wird dabei mechanisch ausgelöst.

Weiterhin ist in EP 0 972 679 B1 ein automatisiertes Andockverfahren eines Zugfahrzeuges mit einem Anhänger an eine Laderampe beschrieben, wobei anhand der Signale von Abstandssensoren bestimmte Geschwindigkeiten beim Rückwärtsfahren eingestellt werden und eine automatisierte Bremsung erfolgt. Dabei ist auch vorgesehen, dass ein geringfügiger Kontakt der Anfahrpuffer (Bumper) des Anhängers mit der Laderampe zulässig ist und bei erkanntem Kontakt das Fahrzeuggespann aus Zugfahrzeug und Anhänger gestoppt wird.

In DE 103 45 748 A1 ist ein Verfahren zum Erkennen eines Andockens eines Fahrzeugs an eine Andockvorrichtung ohne zusätzliche Sensoren oder Schalter beschrieben.

Ausgehend davon ist Aufgabe der Erfindung, ein Verfahren zum Annähern eines Fahrzeuges an eine Laderampe anzugeben, das kostengünstig, mit geringem Aufwand und komfortabel durchzuführen ist. Aufgabe ist weiterhin, eine Steuereinrichtung sowie ein Fahrzeug anzugeben.

Diese Aufgabe wird durch ein Verfahren nach Anspruch 1 sowie eine Steuereinrichtung und ein Fahrzeug nach den unabhängigen Ansprüchen gelöst.

Erfindungsgemäß ist demnach ein Verfahren zum Annähern eines Fahrzeuges an eine Laderampe, beispielsweise auf einem Betriebshof, einem Containerhof, einer Verladestelle, oder beliebigen anderen Verteilerzentren, vorgesehen, wobei sich das Fahrzeug vorzugsweise in einer Rückwärtsbewegung an die Laderampe annähert, wobei das Fahrzeug einen Beschleunigungssensor aufweist, wobei der Beschleunigungssensor ausgebildet ist, eine Fahrzeug-Beschleunigung des Fahrzeuges zu erfassen, vorzugsweise die Fahrzeug-Beschleunigung in Längsrichtung und ggf. auch in Querrichtung. Unter einem Annähern bzw. auch einem Andocken des Fahrzeuges an die Laderampe ist dabei zu verstehen, dass sich das Fahrzeug bis zu einer Berührung an die Laderampe annähert und auch danach die Laderampe auch weiterhin berührt bzw. bis auf wenige Zentimeter von dieser entfernt stehen bleibt, so dass ein Be- oder Entladevorgang komfortabel durchgeführt werden kann. Dazu sind mindestens die folgenden Schritte vorgesehen:
- Begrenzen einer Fahrzeug-Geschwindigkeit des Fahrzeuges derartig, dass das Fahrzeug bei einer Annäherung an die Laderampe eine festgelegte Annäherungs-Geschwindigkeit nicht überschreitet bzw. überschreiten darf. Dies gilt sowohl für eine manuelle als auch für eine automatisierte Ansteuerung eines Antriebssystems des Fahrzeuges und soll sicherstellen, dass sich das Fahrzeug insbesondere in den letzten Metern des aktuellen Annäherungsvorganges der Laderampe nicht zu schnell nähert. Vorzugsweise kann auch vorgesehen sein, dass eine manuelle Ansteuerung des Antriebssystems über ein Gaspedal verhindert ist.
- Überwachen der von dem Beschleunigungssensor gemessenen Fahrzeug-Beschleunigung über die Zeit, insbesondere während der Begrenzung der Fahrzeug-Geschwindigkeit. Bei einer Annäherung wird also die Fahrzeug-Beschleunigung aktiv fortlaufend überwacht. Vorzugsweise kann weiterhin vorgesehen sein, die Fahrzeug-Geschwindigkeit nach dem Begrenzen der Fahrzeug-Geschwindigkeit auf die Annäherungs-Geschwindigkeit über einen Geschwindigkeitssensor und/oder einen Drehzahl-Sensor in einem Getriebe eines Antriebssystems des Fahrzeuges zu überwachen. Dadurch kann der Annäherungsvorgang zusätzlich überwacht werden, insbesondere das Einhalten der Annäherungs-Geschwindigkeit und/oder die zurückgelegte Strecke bis zur Berührung, die aus der Fahrzeug-Geschwindigkeit abgeleitet werden kann.
- Ermitteln eines Annäherungs-Zustandes in Abhängigkeit der zeitlich überwachten Fahrzeug-Beschleunigung, wobei der Annäherungs-Zustand angibt, ob eine Berührung zwischen dem Fahrzeug und der Laderampe erfolgt ist oder nicht. Vorteilhafterweise wird also die fortlaufend überwachte Fahrzeug-Beschleunigung herangezogen, um festzustellen, ob eine Berührung mit der Laderampe stattgefunden hat oder nicht. Dabei wird ausgenutzt, dass das Fahrzeug bei einer Berührung der Laderampe seinen Bewegungszustand ändert. Dies ist in einfacher und zuverlässiger Weise nachweisbar, wenn eine Veränderung der Fahrzeug-Beschleunigung festgestellt wird, so dass eine zeitliche Überwachung der Fahrzeug-Beschleunigung auf eine solche Berührung der Laderampe hinweisen kann. Vorzugsweise ist dabei vorgesehen, dass das Ermitteln des Annäherungs-Zustandes erst dann erfolgt, wenn die Fahrzeug-Geschwindigkeit auf die Annäherungs-Geschwindigkeit begrenzt wurde, so dass der Datenverarbeitungsaufwand minimiert werden kann.

- Bringen des Fahrzeuges in den Stillstand und/oder Halten des Fahrzeuges im Stillstand, wenn als Annäherungs-Zustand eine Berührung des Fahrzeuges mit der Laderampe ermittelt wurde, wobei das Fahrzeug infolge der Berührung mit der Laderampe vorzugsweise in den Stillstand abgebremst wird. Dadurch kann vorteilhafterweise erreicht werden, dass das Fahrzeug nach einer festgestellten Berührung sofort im Sillstand gehalten bzw. in den Stillstand gebracht wird, wobei dies automatisiert erfolgen kann, so dass nach einer Berührung und dem nachfolgenden Stillstand sofort reagiert wird. Ein Zurückrollen nach dem Feststellen einer Berührung wird daher verhindert bzw. weitestgehend unterbunden, so dass ein Ist-Abstand zwischen dem Fahrzeug und der Laderampe möglichst gering ist und daher ein Be- oder Entladevorgang vereinfacht wird.

Das Verfahren erlaubt also durch den Rückgriff auf einen Beschleunigungssensor im Fahrzeug auf einfache und zuverlässige Weise eine Berührung mit der Laderampe zu erkennen und das dann vorzugsweise bereits stillstehende Fahrzeug in dieser Position zu halten. Der Annäherungsvorgang ist dadurch für den Fahrer sehr komfortabel. Bei einer vollautomatisierten Lösung ohne Fahrer ist das Verfahren zudem sicher und kostengünstig, da keine zusätzliche Sensorik im Fahrzeug nötig ist. So kann auf einen präzise messenden Beschleunigungssensor zurückgegriffen werden, der in einem Fahrzeug mit beispielsweise einem elektronischen Stabilitätsregelsystem (ESC) ohnehin bereits vorhanden ist, so dass auch der Kostenaufwand geringgehalten wird.

Vorzugsweise ist weiterhin vorgesehen, dass beim Annähern des Fahrzeuges an die Laderampe ein Ist-Abstand zwischen dem Fahrzeug und der Laderampe ermittelt bzw. gemessen wird. Dies dient vorzugsweise dazu, dass die Fahrzeug-Geschwindigkeit begrenzt wird, sobald beim Annähern des Fahrzeuges an die Laderampe der ermittelte Ist-Abstand einen festgelegten Annäherungs-Abstand unterschreitet. Dadurch kann vorteilhafterweise erreicht werden, dass das Fahrzeug erst in den letzten Metern vor der Laderampe stark verlangsamt wird, so dass der Annäherungsvorgang komfortabler wird. Der Annäherungs-Abstand kann dabei beispielsweise auf zwischen 3,5m und 4m festgelegt werden oder aber situativ auch angepasst werden.

Vorzugsweise ist weiterhin vorgesehen, dass der Ist-Abstand zwischen dem Fahrzeug und der Laderampe mithilfe eines Positionserfassungssystems und/oder eines Umgebungserfassungssystems, das beispielsweise einen Ultraschallsensor und/oder einen Radarsensor und/oder einen LIDAR-Sensor und/oder eine Kamera aufweist, ermittelt wird. Demnach kann auf bereits im Fahrzeug vorhandene Sensoren zurückgegriffen werden, um den Ist-Abstand zumindest grob abzuschätzen, bis der Annäherungs-Abstand erreicht ist und der kontrollierte Annäherungsvorgang gemäß dem erfindungsgemäßen Verfahren beginnt.

Vorzugsweise ist im Rahmen dieses kontrollierten Annäherungsvorganges vorgesehen, dass das Ermitteln des Annäherungs-Zustandes zum Feststellen, ob eine Berührung zwischen dem Fahrzeug und der Laderampe erfolgt ist oder nicht, nicht in Abhängigkeit des ermittelten Ist-Abstandes zwischen dem Fahrzeug und der Laderampe erfolgt. Stattdessen wird für den Annäherungsvorgang auf eine Messgröße zurückgegriffen, die für den kritischen Bereich kurz vor dem Erreichen der Laderampe bei geringer Fahrzeug-Geschwindigkeit einfacher und genauer zu ermitteln ist. Der Ist-Abstand wird also hauptsächlich herangezogen, um einen geeigneten Zeitpunkt für die Geschwindigkeitsbegrenzung zu finden. Für das Feststellen eine Berührung wird jedoch erfindungsgemäß auf die zeitlich überwachte Fahrzeug-Beschleunigung zurückgegriffen.

Vorzugsweise ist weiterhin vorgesehen, dass eine Berührung zwischen dem Fahrzeug und der Laderampe als Annäherungs-Zustand ermittelt wird, wenn festgestellt wird, dass
- die Fahrzeug-Beschleunigung einen festgelegten Beschleunigungs-Grenzwert und/oder
- ein Fahrzeug-Ruck einen festgelegten Ruck-Grenzwert erreicht oder betragsmäßig überschreitet, wobei der Fahrzeug-Ruck aus der Fahrzeug-Beschleunigung durch zeitliches Ableiten folgt.

Daher kann gemäß der Erfindung unter einem Überwachen der Fahrzeug-Beschleunigung über die Zeit sowohl ein direktes zeitliches Nachverfolgen der Fahrzeug-Beschleunigung als auch eine Betrachtung der zeitlichen Veränderung der Fahrzeug-Beschleunigung, die durch die zeitliche Ableitung bzw. den Fahrzeug-Ruck charakterisiert wird, verstanden werden. Aus beiden Größen lässt sich durch eine entsprechende Festlegung des jeweiligen Grenzwertes feststellen, ob eine normale Abbremsung infolge einer manuellen oder einer automatisierten Bremsanforderung erfolgt ist oder infolge einer Berührung des Fahrzeuges mit der Laderampe. Die Berührung mit der Laderampe führt nämlich normalerweise zu einem abrupteren Abbremsen des Fahrzeuges mit einer höheren Verzögerung, was sich durch das zeitliche Überwachen der Fahrzeug-Beschleunigung entsprechend feststellen lässt.

Vorzugsweise ist weiterhin vorgesehen, dass der Beschleunigungs-Grenzwert und/oder der Ruck-Grenzwert und/oder die Annäherungs-Geschwindigkeit und/oder auch der Annäherungs-Abstand und/oder ein für den aktuellen Annäherungsvorgang eingestelltes Motordrehmoment in Abhängigkeit von Annäherungs-Informationen aus mindestens einem vorangegangenen Annäherungsvorgang angepasst wird oder werden. Daher kann beispielsweise rampenspezifisch festgelegt werden, wie der Annäherungsvorgang unter Rückgriff auf Beobachtungen in der Vergangenheit optimiert werden kann. Ist die Laderampe beispielsweise abgefedert, ist eine andere Fahrzeug-Beschleunigung bzw. ein anderer Fahrzeug-Ruck bei einer Berührung zu erwarten. Die Grenzwerte sind daher entsprechend abzustimmen. Auch die Fahrzeug-Geschwindigkeit für eine Annäherung sowie das einzustellende Drehmoment können je nach Laderampe, an die sich das Fahrzeug annähert, variieren und daher in Abhängigkeit von vorangegangenen Annäherungs-Informationen angepasst werden. Als Annäherungs-Information kann auch die aus der gemessenen Fahrzeug-Geschwindigkeit ermittelte zurückgelegte Strecke herangezogen werden, beispielsweise zur Festlegung des Annäherungs-Abstandes für einen zukünftigen Annäherungsvorgang.

Vorzugsweise ist dazu weiterhin vorgesehen, dass ein selbstlernender Algorithmus den Beschleunigungs-Grenzwert und/oder den Ruck-Grenzwert und/oder die Annäherungs-Geschwindigkeit und/oder auch den Annäherungs-Abstand und/oder das für den aktuellen Annäherungsvorgang eingestellte Motordrehmoment in Abhängigkeit der Annäherungs-Informationen aus mindestens einem vorangegangenen Annäherungsvorgang selbstlernend anpasst. Der Algorithmus lernt also vorteilhafterweise mit jedem Annäherungsvorgang aus Informationen, die ihm über Sensoren zur Verfügung gestellt werden. Dadurch können nachfolgende Annäherungsvorgänge in einfacher Weise mit wenig Aufwand optimiert werden. Es ist lediglich ein entsprechend programmierter selbstlernender Algorithmus zur Verfügung zu stellen, den diese vergangenen Annäherungs-Informationen übermittelt werden.

Vorzugsweise ist weiterhin vorgesehen, dass ferner überwacht wird, ob sich das Fahrzeug im Stillstand befindet, und der Annäherungs-Zustand in Abhängigkeit davon ermittelt wird, ob sich das Fahrzeug im Stillstand befindet, wobei eine Berührung zwischen dem Fahrzeug und der Laderampe als Annäherungs-Zustand ermittelt wird, wenn der Stillstand des Fahrzeuges festgestellt wird. Dadurch kann im einfachsten Fall die Feststellung einer Berührung in Abhängigkeit der zeitlichen Überwachung der Fahrzeug-Beschleunigung plausibilisiert werden. Ein festgestellter Stillstand kann aber auch dann herangezogen werden, wenn sich aus der zeitlich überwachten Fahrzeug-Beschleunigung keine eindeutigen Schlüsse bezüglich einer Berührung zwischen dem Fahrzeug und der Laderampe ziehen lassen. Die zeitliche Überwachung der Fahrzeug-Beschleunigung wird also mit der Überwachung des Stillstandes kombiniert.

Vorzugsweise kann also vorgesehen sein, dass bei einem Feststellen des Stillstandes des Fahrzeuges erst dann eine Berührung zwischen dem Fahrzeug und der Laderampe als Annäherungs-Zustand ermittelt wird, wenn
- auch die zeitlich überwachte Fahrzeug-Beschleunigung auf eine Berührung zwischen dem Fahrzeug und der Laderampe hinweist und/oder
- sich die Fahrzeug-Geschwindigkeit trotz einer Erhöhung eines Motordrehmomentes infolge des Feststellens des Stillstandes nicht verändert, z.B. auch dann, wenn die zeitlich überwachte Fahrzeug-Beschleunigung nicht auf eine Berührung zwischen dem Fahrzeug und der Laderampe hinweist. Auf diese Weise kann sichergestellt werden, dass das Fahrzeug nicht beispielsweise in einer Fahrbahnvertiefung "festhängt" und daher der Stillstand festgestellt wird. Bewegt sich das Fahrzeug infolge einer Erhöhung des Motordrehmoments immer noch nicht, kann mit hoher Sicherheit davon ausgegangen werden, dass auch ohne einen entsprechenden Hinweis aus dem zeitlichen Verlauf der Fahrzeug-Beschleunigung die Laderampe bereits berührt wird und das Fahrzeug an einer weiteren Bewegung gehindert wird.

Vorzugsweise ist weiterhin vorgesehen, dass das Fahrzeug durch Betriebsbremsen und/oder Feststellbremsen im Stillstand gehalten wird, wenn als Annäherungs-Zustand eine Berührung des Fahrzeuges mit der Laderampe ermittelt wurde. Dadurch kann nach dem Feststellen einer Berührung des Fahrzeuges mit der Laderampe schnell und sicher der aktuelle Ist-Abstand gehalten werden, so dass der Be- oder Entladevorgang komfortabel durchgeführt werden kann. Vorzugsweise kann dabei vorgesehen sein, dass das Fahrzeug zunächst durch die Betriebsbremsen im Stillstand gehalten wird und die Bremskraft anschließend auf die Feststellbremsen verlagert wird. Dadurch kann über die Betriebsbremsen zunächst schnell eine Bremskraft aufgebaut werden, die dann nach dem Ausstellen der Zündung über die Feststellbremse sicher gehalten werden kann.

Erfindungsgemäß ist weiterhin eine Steuereinrichtung für ein Fahrzeug zur Durchführung des erfindungsgemäßen Verfahrens vorgesehen, wobei die Steuereinrichtung mit einem Beschleunigungssensor signalleitend verbindbar ist und ausgebildet ist,
- eine Fahrzeug-Geschwindigkeit des Fahrzeuges derartig zu begrenzen, dass das Fahrzeug bei einer Annäherung an eine Laderampe eine festgelegte Annäherungs-Geschwindigkeit nicht überschreitet;
- eine von dem Beschleunigungssensor gemessene Fahrzeug-Beschleunigung über die Zeit zu überwachen;
- einen Annäherungs-Zustand in Abhängigkeit der zeitlich überwachten Fahrzeug-Beschleunigung zu ermitteln, wobei der Annäherungs-Zustand angibt, ob eine Berührung zwischen dem Fahrzeug und der Laderampe erfolgt ist oder nicht; und
- das Fahrzeug in den Stillstand zu bringen und/oder im Stillstand zu halten, wenn als Annäherungs-Zustand eine Berührung des Fahrzeuges mit der Laderampe ermittelt wurde.

Weiterhin ist erfindungsgemäß ein Fahrzeug mit einem Bremssystem, einem Antriebssystem und einer erfindungsgemäßen Steuereinrichtung vorgesehen, wobei das Fahrzeug einen Beschleunigungssensor aufweist, beispielsweise als Bestandteil eines elektronischen Stabilitätsregelsystems. wobei der Beschleunigungssensor ausgebildet ist, eine Fahrzeug-Beschleunigung des Fahrzeuges zu erfassen, vorzugsweise in eine Längsrichtung und ggf. auch in einer Querrichtung bezüglich des Fahrzeuges, wobei die Steuereinrichtung signalleitend mit dem Beschleunigungssensor verbunden ist zum Übertragen der gemessenen Fahrzeug-Beschleunigung auf die Steuereinrichtung, und die Steuereinrichtung ferner ausgebildet ist,
- das Antriebssystem anzusteuern zum Begrenzen der Fahrzeug-Geschwindigkeit auf die Annäherungs-Geschwindigkeit und
- das Bremssystem anzusteuern zum Bringen des Fahrzeuges in den Stillstand und/oder zum Halten des Fahrzeuges im Stillstand, wenn als Annäherungs-Zustand eine Berührung des Fahrzeuges mit einer Laderampe ermittelt wurde.

Die Erfindung wird im Folgenden anhand eines Ausführungsbeispiels näher erläutert. Es zeigen:
- Fig. 1: ein Fahrzeug in einer schematischen Ansicht;
- Fig. 2, 3, 4: zeitliche Verläufe einer Fahrzeug-Geschwindigkeit, einer Fahrzeug-Beschleunigung und eines Fahrzeug-Rucks; und
- Fig. 5: ein Flussdiagramm des erfindungsgemäßen Verfahrens.

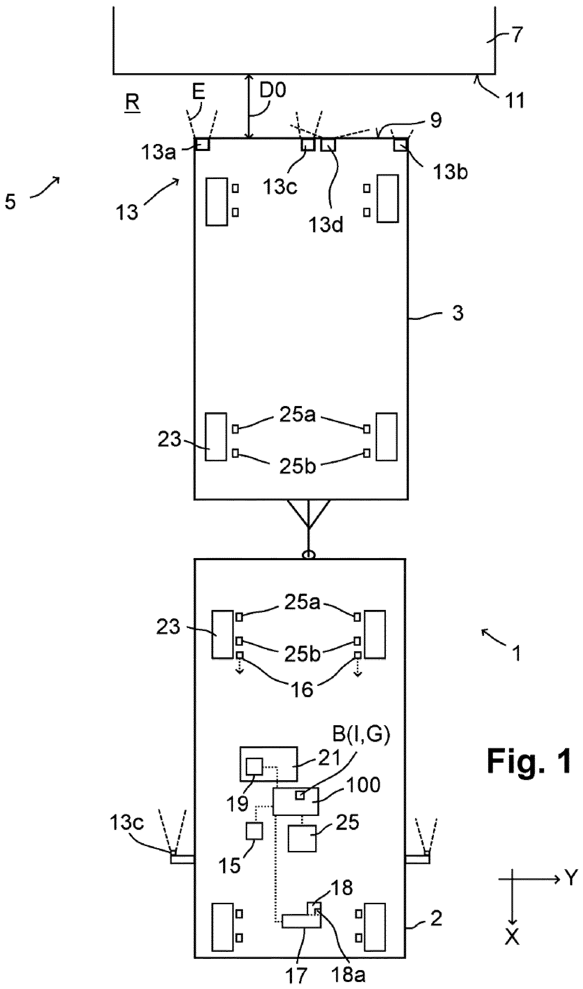

In Figur 1 ist schematisch ein Fahrzeug 1 dargestellt, das beispielhaft aus einem Zugfahrzeug 2 und einem Anhänger 3 (Deichselanhänger) besteht. Grundsätzlich kann das im Folgenden beschriebene Verfahren an jedem beliebigen einteiligen oder mehrteiligen Fahrzeug 1 zur Anwendung kommen. Das Fahrzeug 1 befindet sich beispielsweise auf einem Betriebshof 5, auf dem sich eine Laderampe 7 befindet, an die das Fahrzeug 1 für einen Be- oder Entladevorgang rückwärts angenähert bzw. angedockt werden soll.

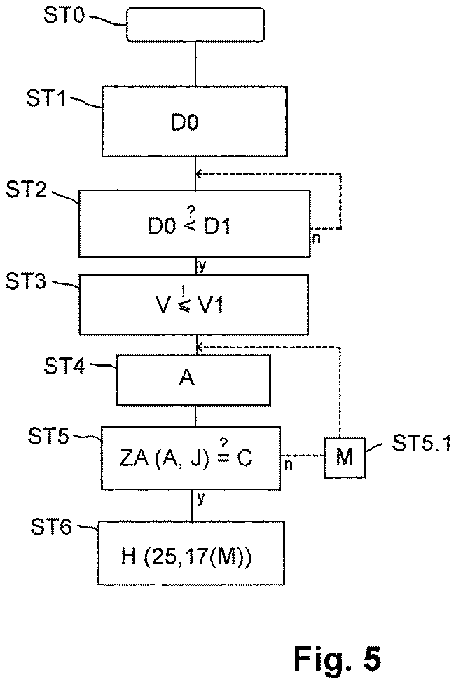

Sobald erkannt wurde, dass das Fahrzeug 1 manuell oder (teil)automatisiert rückwärts an die Laderampe 7 heranfährt, kann das erfindungsgemäße Verfahren, das in einer Steuereinrichtung 100 im Fahrzeug 1 ausgeführt wird, gestartet werden (ST0). Beispielhaft ist der Verfahrensablauf in dem Flussdiagramm in Fig. 5 dargestellt:
In einem ersten Schritt ST1 wird zunächst ein Ist-Abstand D0 zwischen einer Rückseite 9 des Fahrzeuges 1 (im gezeigten Ausführungsbeispiel die Rückseite des Anhängers 3) und einer Andockfläche 11 der Laderampe 7, an die sich das Fahrzeug 1 annähert, abgeschätzt. Der Ist-Abstand D0 kann dabei beispielsweise über ein Umgebungserfassungssystem 13 abgeschätzt werden, das vorzugsweise am Fahrzeug 1 angeordnet ist, d.h. am Zugfahrzeug 2 oder am Anhänger 3, und das ausgebildet ist, einen Rückraum R hinter dem Fahrzeug 1 zu überwachen. Zum Rückraum R zählt insbesondere die Laderampe 7, so dass das Umgebungserfassungssystem 13 entsprechend darauf ausgerichtet ist.

Das Umgebungserfassungssystem 13 kann beispielsweise mindestens einen Ultraschallsensor 13a und/oder mindestens einen Radarsensor 13b und/oder mindestens einen LIDAR-Sensor 13c (beispielsweise auch am Spiegel des Fahrzeuges 1) und/oder mindestens eine Kamera 13d aufweisen, über die der Ist-Abstand D0 abgeschätzt werden kann, sobald die Laderampe 7 in den Erfassungsbereichen E (gestrichelte Linie) dieser Sensoriken 13a, 13b, 13c, 13d liegt. Ergänzend oder alternativ kann im Fahrzeug 1 ein Positionserfassungssystem 15 vorgesehen sein, das basierend auf Signalen eines beliebigen globalen Navigationssatellitensystems (GNSS), z.B. GPS, GLONASS, etc., eine Position des Fahrzeuges 1 relativ zur Laderampe 7 ermittelt, wobei auch daraus in Kenntnis der Position der Laderampe 7 der Ist-Abstand D0 zumindest abgeschätzt werden kann.

Daher kann für eine grobe Abstandsermittlung auf normalerweise bereits vorhandene Sensoren im Fahrzeug 1 zurückgegriffen werden, wobei das Umgebungserfassungssystem 13 bzw. das Positionserfassungssystem 15 dazu entsprechend signalleitend mit der Steuereinrichtung 100 verbunden sind. Der Ist-Abstand D0 wird in diesem Schritt lediglich grob abgeschätzt, um einen Aktivierungszeitpunkt für eine nachfolgende Geschwindigkeitsbegrenzung automatisch festlegen zu können. Dadurch kann verhindert werden, dass das Fahrzeug 1 eine zu große Strecke mit einer Geschwindigkeitsbegrenzung zu bewegen ist und daher der Komfort für den Fahrer beeinträchtigt wird. Grundsätzlich kann dieser Schritt ST1 aber auch entfallen und der Aktivierungszeitpunkt auch anderweitig automatisch oder manuell festgelegt werden.

Für die Geschwindigkeitsbegrenzung wird nachfolgend in einem zweiten Schritt ST2 geprüft, ob der im ersten Schritt ST1 ermittelte Ist-Abstand D0 einen vorher festgelegten Annäherungs-Abstand D1 unterschreitet. Der Annäherungs-Abstand D1 kann hierbei in Abhängigkeit der Genauigkeit des Umgebungserfassungssystems 13 bzw. des Positionserfassungssystems 15, mit denen der Ist-Abstand D0 ermittelt wird, festgelegt werden. Unabhängig davon kann der Annäherungs-Abstand D1 aber auch aufgrund von Erfahrungswerten auf beispielsweise zwischen 4.5 m und 3 m festgelegt werden. Weiterhin kann auf der Steuereinrichtung 100 ein Algorithmus B vorgesehen sein, der beispielsweise selbstlernend den Annäherungs-Abstand D1 anpasst, wie später noch beschrieben.

Erreicht oder unterschreitet der Ist-Abstand D0 den Annäherungs-Abstand D1 wird in einem dritten Schritt ST3 der Betrag der Fahrzeug-Geschwindigkeit V des Fahrzeuges 1 von der Steuereinrichtung 100 auf eine Annäherungs-Geschwindigkeit V1 begrenzt (Geschwindigkeitsbeschränkung). Die Annäherungs-Geschwindigkeit V1 liegt beispielsweise bei weniger als 1 km/h, vorzugsweise bei weniger als 0,5 km/h, insbesondere bei ca. 0,2 km/h. Über den auf der Steuereinrichtung 100 vorgesehenen Algorithmus B kann die Annäherungs-Geschwindigkeit V1 aber beispielsweise selbstlernend auch noch angepasst werden, wie später noch näher erläutert.

Trotz einer manuellen oder automatisierten Ansteuerung eines Antriebssystems 17 des Fahrzeuges 1 kann während einer Rückwärtsfahrt also keine Fahrzeug-Geschwindigkeit V erreicht werden, die betragsmäßig größer als die festgelegte Annäherungs-Geschwindigkeit V1 ist. Für Ist-Abstände D0, die kleiner als der Annäherungs-Abstand D1 sind, bewegt sich das Fahrzeug 1 also maximal mit der Annäherungs-Geschwindigkeit V1 rückwärts. Die Funktion des Gaspedals des Fahrzeuges 1 kann ergänzend dazu von der Steuereinrichtung 100 auch deaktiviert werden, sobald der Annäherungs-Abstand D1 unterschritten wurde.

Die Fahrzeug-Geschwindigkeit V kann beispielsweise durch aktive Geschwindigkeitssensoren 16 an den Rädern 23 die auch bei niedrigen Fahrzeug-Geschwindigkeiten V genau sind, überwacht werden. Ergänzend oder alternativ dazu kann auf Drehzahl-Sensoren 18a in einem Getriebe 18 des Antriebsstrangs des Antriebssystems 17 zurückgegriffen werden, wobei aus einer Drehzahl der Getriebewellen ggf. unter Berücksichtigung des Übersetzungsverhältnisses die Fahrzeug-Geschwindigkeit V ermittelt werden kann.

In einem vierten Schritt ST4 wird fortlaufend eine Fahrzeug-Beschleunigung A oder eine diese charakterisierende Größe ermittelt und überwacht. Die Fahrzeug-Beschleunigung A wird von mindestens einem Beschleunigungssensor 19 im Fahrzeug 1 direkt gemessen, wobei sich der Beschleunigungssensors 19 im Zugfahrzeug 2 und/oder im Anhänger 3 befindet. Der Beschleunigungssensor 19 ist ausgebildet, die Fahrzeug-Beschleunigung A zumindest in Längsrichtung X bezüglich des Fahrzeuges 1 zu erfassen und ggf. auch in Querrichtung Y.

Dabei kann auf einen Beschleunigungssensor 19 zurückgegriffen werden, der als Bestandteil eines elektronischen Stabilitätsregelsystems 21 (ESC) im Fahrzeug 1 bereits vorhanden ist. Das elektronische Stabilitätsregelsystem 21 kontrolliert dabei in Abhängigkeit der gemessenen Beschleunigung A in Längs- und/oder Querrichtung X, Y sowie ggf. weiterer Größen die Stabilität des Fahrzeuges 1, so dass unter Rückgriff auf diesen vorhandenen Sensor die Fahrzeug-Beschleunigung A mit hoher Präzision auch bei niedrigen Fahrzeug-Geschwindigkeiten V ermittelt werden kann.

Vorzugsweise wird als Beschleunigungssensor 19 im Sinne der Erfindung kein Rad-Drehzahlsensor verstanden, der die Raddrehzahlen der Räder 23 des Fahrzeuges 1 misst, wobei durch Ableiten dieser geschwindigkeitsabhängigen Messgröße mittelbar auf die Fahrzeug-Beschleunigung A des Fahrzeuges 1 geschlossen werden kann. Raddrehzahlsensoren können nämlich aufgrund ihrer üblichen Funktionsweise mit einem Polrad bei sehr niedrigen Fahrzeug-Geschwindigkeiten V, die für die erfindungsgemäße Annäherung relevant sind, herkömmlicherweise keine zuverlässigen Ergebnisse über das Drehverhalten der Räder 23 liefern. Die aus den Raddrehzahlen ermittelte Fahrzeug-Beschleunigung A wäre daher fehlerbehaftet bzw. entspricht diese nicht mit Sicherheit der tatsächlichen Fahrzeug-Beschleunigung A des Fahrzeuges 1. Eine derartig ermittelte Fahrzeug-Beschleunigung A würde die Annäherung des Fahrzeuges 1 an die Laderampe 7 also nicht zwangsläufig genauer und zuverlässiger machen. Insofern wird für das erfindungsgemäße Verfahren vorzugsweise auf einen die Fahrzeug-Beschleunigung A direkt messenden Beschleunigungssensor 19 zurückgegriffen.

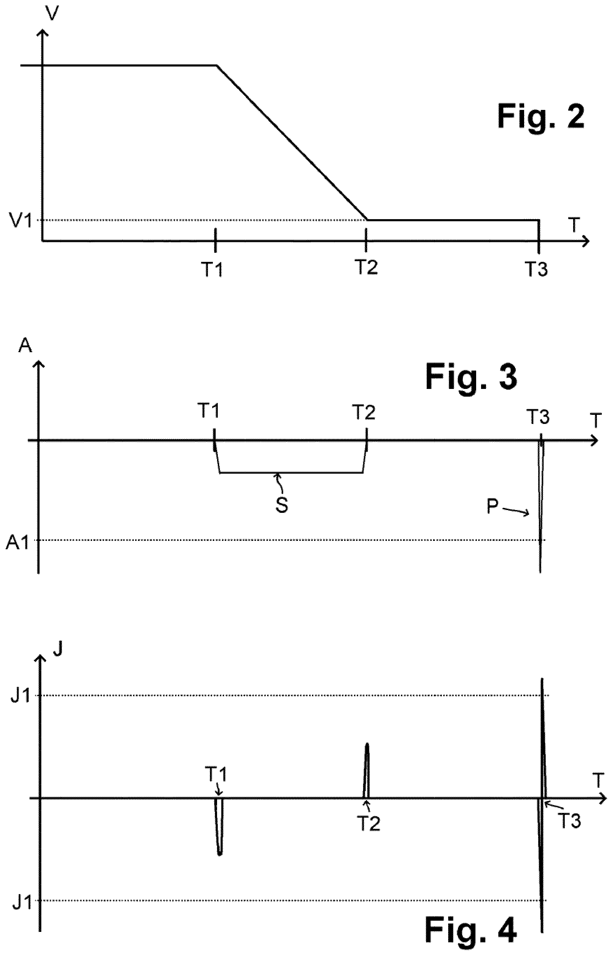

Im Rahmen der Annäherung des Fahrzeuges 1 an die Laderampe 7 wird in Abhängigkeit der im vierten Schritt ST4 gemessenen bzw. überwachten Fahrzeug-Beschleunigung A in einem fünften Schritt ST5 ein Annäherungs-Zustand ZA ermittelt bzw. geprüft. Dazu wird die Fahrzeug-Beschleunigung A über die Zeit T überwacht und ermittelt, ob das zeitliche Verhalten auf eine Wechselwirkung bzw. eine Berührung C zwischen dem Fahrzeug 1 und der Laderampe 7 hinweist. Beispielhaft ist das zeitliche Verhalten des Fahrzeuges 1 in den Figuren 2 (Fahrzeug-Geschwindigkeit V), 3 (Fahrzeug-Beschleunigung A), 4 (Fahrzeug-Ruck J) dargestellt:
Zu einem ersten Zeitpunkt T1 erfolgt nach Erreichen des Annäherungs-Abstandes D1 die Reduzierung der Fahrzeug-Geschwindigkeit V infolge der Begrenzung der Fahrzeug-Geschwindigkeit V auf die Annäherungs-Geschwindigkeit V1 im Schritt ST3, wobei die Annäherungs-Geschwindigkeit V1 zu einem zweiten Zeitpunkt T2 erreicht bzw. unterschritten wird. Entsprechend wird durch den Beschleunigungssensor 19 in der Fahrzeug-Beschleunigung A zwischen dem ersten und dem zweiten Zeitpunkt T1, T2 eine Stufe S gemessen. Nach dem zweiten Zeitpunkt T2 bleibt die Fahrzeug-Geschwindigkeit V im gezeigten Ausführungsbeispiel zunächst in etwa konstant.

Zu einem dritten Zeitpunkt T3 wird das Fahrzeug 1 bei der rückwärtigen Bewegung durch die Laderampe 7 "aufgehalten" bzw. an einer weiteren Bewegung gehindert. Dies ist in dem zeitlichen Verhalten der Fahrzeug-Beschleunigung A gemäß Fig. 3 in Form eines Peaks P zu erkennen. Die Fahrzeug-Beschleunigung A steigt also durch die Berührung C mit der Laderampe 7 betragsmäßig zunächst sprunghaft an (Abbremsen in den Stillstand H) und fällt anschließend wieder sprunghaft auf null ab, sobald sich das Fahrzeug 1 im Stillstand H befindet. Durch die Berührung C mit der Laderampe 7 wird das Fahrzeug 1 also gleichzeitig in den Stillstand H abgebremst.

Um eine solche Berührung C eindeutig zu erkennen, kann im fünften Schritt ST5 also beispielsweise geprüft werden, ob der Betrag der Fahrzeug-Beschleunigung A einen Beschleunigungs-Grenzwert A1 und/oder der Betrag des Fahrzeug-Rucks J einen Ruck-Grenzwert J1 überschreitet. Wie der Figur 3 zu entnehmen ist, fällt die Fahrzeug-Beschleunigung A zwischen den Zeitpunkten T1 und T2 nicht so stark ab wie zu dem Zeitpunkt T3. Eine Abbremsung des Fahrzeuges 1 infolge einer aktiv angeforderten Änderung der Fahrzeug-Geschwindigkeit V ist also von einer abrupten Abbremsung des Fahrzeuges 1 infolge einer Berührung C mit der Laderampe 7 klar zu unterscheiden. Auch der Fahrzeug-Ruck J zu den Zeitpunkten T1, T2 (aktiv angeforderte Abbremsung) unterscheidet sich von dem Fahrzeug-Ruck J zum Zeitpunkt T3 bei einer Berührung C mit der Laderampe 7.

Die Grenzwerte A1, J1 für die Fahrzeug-Beschleunigung A bzw. für den Fahrzeug-Ruck J können also derartig festgelegt werden, dass bei einer zeitlichen Betrachtung bzw. Analyse der Fahrzeug-Beschleunigung A möglichst eindeutig festgestellt werden kann, ob eine Berührung C mit der Laderampe 7 erfolgt ist oder nicht. Entsprechend wird dies als Annäherungs-Zustand ZA ausgegeben. Auch die Grenzwerte A1, J1 für die Fahrzeug-Beschleunigung A bzw. für den Fahrzeug-Ruck J können in dem Algorithmus B auf der Steuereinrichtung 10 beispielsweise selbstlernend anhand von Beobachtungen bzw. Annäherungs-Informationen I aus einem oder mehreren vorangegangenen Annäherungsvorgängen G angepasst werden, wie noch näher erläutert.

Gibt der Annäherungs-Zustand ZA an, dass die Laderampe 7 erreicht wurde bzw. eine Berührung C erfolgt ist, wird in einem sechsten Schritt ST6 ein Bremssystem 25 des Fahrzeuges 1 derartig angesteuert, dass das Fahrzeug 1 im Stillstand H gehalten wird, beispielsweise durch eine automatisierte Betätigung der Betriebsbremsen 25a und/oder der Feststellbremsen 25b des Fahrzeuges 1, vorzugsweise im Zugfahrzeug 2 und im Anhänger 3. Es kann auch eine Umverteilung vorgesehen sein, d.h. zunächst werden lediglich die Betriebsbremsen 25a angezogen und die Bremskraft anschließend auf die Feststellbremsen 25b verlagert. Dadurch kann eine Bremskraft zunächst schnell aufgebaut werden und dies anschließend auf die dauerhaft wirkende Feststellbremse 25b übertragen werden. Gleichzeitig wird das Motordrehmoment M durch eine Ansteuerung des Antriebssystems 17 auf null reduziert.

Kann im fünften Schritt ST5 bis zu dem Erreichen einer Fahrzeug-Geschwindigkeit V von null weder das Erreichen und/oder Überschreiten des Beschleunigungs-Grenzwertes A1 noch des Ruck-Grenzwertes J1 festgestellt werden, wird in einem Zwischenschritt ST5.1 das vom Antriebssystem 17 umgesetzte Motordrehmoment M erhöht und anschließend das zeitliche Verhalten der Beschleunigung A und/oder der Fahrzeug-Geschwindigkeit V weiterhin überwacht. Dabei wird insbesondere geprüft, ob infolge der Erhöhung des Motordrehmoments M die Fahrzeug-Geschwindigkeit V wieder ansteigt und/oder nachfolgend auch der Beschleunigungs-Grenzwert A1 bzw. der Ruck-Grenzwert J1 erreicht bzw. überschritten werden.

Dieser Zwischenschritt 5.1 dient der Unterscheidung, ob das Fahrzeug 1 bei der geringen Annäherungs-Geschwindigkeit V1 infolge eines zu niedrigen Motordrehmoments M in einer Fahrbahnvertiefung bzw. Spurrille "gefangen" ist oder die Laderampe 7 bereits erreicht wurde, ohne dass die jeweiligen Grenzwerte A1, J1 überschritten wurden, beispielsweise aufgrund einer unerwarteten Abfederung an der Laderampe 7 oder einer zu geringen Messauflösung des Beschleunigungssensors 19 oder dergleichen.

Diese Beobachtungen können als Annäherungs-Information I von dem auf der Steuereinrichtung 100 installierten Algorithmus B herangezogen werden, um aus vorangegangenen Annäherungsvorgängen G zu lernen. Der Algorithmus B kann dann den Beschleunigungs-Grenzwert A1 und/oder den Ruck-Grenzwert J1 und/oder das Motordrehmoment M und/oder die Annäherungs-Geschwindigkeit V1 für nachfolgende Annäherungsvorgänge selbstlernend anpassen, um z.B. nicht mehr in der Vertiefung stecken zu bleiben bzw. eine messbare Fahrzeugreaktion bei einer Berührung C mit der Laderampe 7 zu erhalten. Dabei kann beispielsweise auch berücksichtigt werden, ob nach einer erfolgreich festgestellten Berührung C ein Peak P mit einer bestimmten Fahrzeug-Beschleunigung A bzw. entsprechend einem bestimmten Fahrzeug-Ruck J auftritt, die für die nachfolgenden Annäherungsvorgänge als Grenzwerte A1, J1 rampenspezifisch neu festgelegt werden können. Dadurch kann z.B. eine rampenspezifische Abfederung bei einer Berührung C berücksichtigt werden. Der Algorithmus B lernt also durch die zur Verfügung stehenden Annäherungs-Informationen I aus vorangegangenen Annäherungsvorgängen G hinzu und kann die Strategie für zukünftige Annäherungsvorgänge entsprechend anpassen.

Auf diese Weise kann von dem auf der Steuereinrichtung 100 installierten selbstlernenden Algorithmus B basierend auf Beobachtungen bzw. Annäherungs-Informationen I aus einem oder mehreren vorangegangenen Annäherungsvorgängen G auch die Annäherungs-Geschwindigkeit V1 angepasst werden. Wurde in einem oder mehreren vorangegangen Annäherungsvorgängen G beispielsweise festgestellt, dass die Berührung C mit der Laderampe 7 bei der festgelegten Annäherungs-Geschwindigkeit V1 zu einer sehr hohen Fahrzeug-Beschleunigung A bzw. einem sehr hohen Fahrzeug-Ruck J bei einer Berührung C (Peak P) führt, kann eine entsprechende rampenspezifische Reduzierung der Annäherungs-Geschwindigkeit V1 vorgesehen sein. So können Beschädigungen am Gebäude der Laderampe 7 oder am Fahrzeug 1 vermieden werden. Auf der anderen Seite kann die Annäherungs-Geschwindigkeit V1 bei zu niedriger Veränderung der Fahrzeug-Beschleunigung A bei Berührung C mit jedem Annäherungsvorgang sukzessive erhöht werden.

Auch der Annäherungs-Abstand D1 kann von dem Algorithmus B basierend auf Beobachtungen bzw. Annäherungs-Informationen I aus einem oder mehreren vorangehenden Annäherungsvorgängen G angepasst werden. Wird beispielsweise festgestellt, dass der Ist-Abstand D0 für eine Laderampe 7 mit erhöhter Sicherheit durch das jeweilige Umgebungserfassungssystem 13 bzw. Positionserfassungssystem 15 ermittelbar ist und/oder die Annäherung an die Laderampe 7 mit der Annäherungs-Geschwindigkeit V1 in mehreren vorangegangenen Annäherungsvorgängen G sehr lange gedauert hat, kann der Annäherungs-Abstand D1 mit jedem Annäherungsvorgang sukzessive unter zeitlicher Beobachtung weiter reduziert werden. Dazu können auch Informationen von weiteren Sensoren im Fahrzeug 1 herangezogen werden.

Auf diese Weise können von dem Algorithmus B durch Hinzulernen durch Beobachtung bzw. durch Rückgriff auf vorhandene Annäherungs-Informationen I rampenspezifisch unterschiedliche Annäherungs-Geschwindigkeiten V1 und/oder Annäherungs-Abstände D1 und/oder Beschleunigungs-Grenzwerte A1 und/oder Ruck-Grenzwerte J1 festgelegt und abgespeichert werden. Je nach erkannter Laderampe 7 können diese dann beim nächsten Annäherungsvorgang von der Steuereinrichtung 100 eingelesen werden.

### Bezugszeichenliste (Teil der Beschreibung)

- 1: Fahrzeug
- 2: Zugfahrzeug
- 3: Anhänger
- 5: Betriebshof
- 7: Laderampe
- 9: Rückseite des Fahrzeuges 1
- 11: Andockfläche der Laderampe 7
- 13: Umgebungserfassungssystem
- 13a: Ultraschallsensor
- 13b: Radarsensor
- 13c: LIDAR-Sensor
- 13d: Kamera
- 15: Positionserfassungssystem
- 16: Geschwindigkeitssensor
- 17: Antriebssystem
- 18: Getriebe
- 18a: Drehzahl-Sensoren 18a in dem Getriebe 18
- 19: Beschleunigungssensor
- 21: elektronisches Stabilitätsregelsystem (ESC)
- 23: Räder des Fahrzeuges
- 25: Bremssystem
- 25a: Betriebsbremse
- 25b: Feststellbremse
- 100: Steuereinrichtung
- A: Fahrzeug-Beschleunigung
- B: Algorithmus
- C: Berührung
- D0: Ist-Abstand
- D1: Annäherungs-Abstand
- E: Erfassungsbereich
- G: vorangegangener Annäherungsvorgang
- H: Stillstand
- I: Annäherungs-Information
- M: Motordrehmoment
- P: Peak
- R: Rückraum
- S: Stufe
- T: Zeit
- T1: erster Zeitpunkt
- T2: zweiter Zeitpunkt
- T3: dritter Zeitpunkt
- V: Fahrzeug-Geschwindigkeit
- V1: Annäherungs-Geschwindigkeit
- ZA: Annäherungs-Zustand

- ST1, ST2, ST3, ST4, ST5.1, ST6: Schritte des Verfahrens

## Patentansprüche

1. Verfahren zum Annähern eines Fahrzeuges (1) an eine Laderampe (7), wobei das Fahrzeug (1) einen Beschleunigungssensor (19) aufweist, wobei der Beschleunigungssensor (19) ausgebildet ist, eine Fahrzeug-Beschleunigung (A) des Fahrzeuges (1) zu erfassen, mit mindestens den folgenden Schritten:
- Begrenzen einer Fahrzeug-Geschwindigkeit (V) des Fahrzeuges (1) derartig, dass das Fahrzeug (1) bei einer Annäherung an die Laderampe (7) eine festgelegte Annäherungs-Geschwindigkeit (V1) nicht überschreitet (ST3);
- Überwachen der von dem Beschleunigungssensor (19) gemessenen Fahrzeug-Beschleunigung (A) über die Zeit (T) (ST4);
- Ermitteln eines Annäherungs-Zustandes (ZA) in Abhängigkeit der zeitlich überwachten Fahrzeug-Beschleunigung (A), wobei der Annäherungs-Zustand (ZA) angibt, ob eine Berührung (C) zwischen dem Fahrzeug (1) und der Laderampe (7) erfolgt ist oder nicht (ST5); und
- Bringen des Fahrzeuges (1) in den Stillstand (H) und/oder Halten des Fahrzeuges (1) im Stillstand (H), wenn als Annäherungs-Zustand (ZA) eine Berührung (C) des Fahrzeuges (1) mit der Laderampe (7) ermittelt wurde (ST6).

2. Verfahren nach Anspruch 1, **dadurch gekennzeichnet, dass** beim Annähern des Fahrzeuges (1) an die Laderampe (7) ein Ist-Abstand (D0) zwischen dem Fahrzeug (1) und der Laderampe (7) ermittelt wird (ST1).

3. Verfahren nach Anspruch 2, **dadurch gekennzeichnet, dass** die Fahrzeug-Geschwindigkeit (V) begrenzt wird (ST3), sobald beim Annähern des Fahrzeuges (1) an die Laderampe (7) der ermittelte Ist-Abstand (D0) einen festgelegten Annäherungs-Abstand (D1) unterschreitet (ST2).

4. Verfahren nach Anspruch 2 oder 3, **dadurch gekennzeichnet, dass** der Ist-Abstand (D0) zwischen dem Fahrzeug (1) und der Laderampe (7) mithilfe eines Positionserfassungssystems (15) und/oder eines Umgebungserfassungssystems (13), das beispielsweise einen Ultraschallsensor (13a) und/oder einen Radarsensor (13b) und/oder einen LIDAR-Sensor (13c) und/oder eine Kamera (13d) aufweist, ermittelt wird.

5. Verfahren nach einem der Ansprüche 2 bis 4, **dadurch gekennzeichnet, dass** das Ermitteln des Annäherungs-Zustandes (ZA) zum Feststellen, ob eine Berührung (C) zwischen dem Fahrzeug (1) und der Laderampe (7) erfolgt ist oder nicht (ST5), nicht in Abhängigkeit des ermittelten Ist-Abstandes (D0) zwischen dem Fahrzeug (1) und der Laderampe (7) erfolgt.

6. Verfahren nach einem der vorhergehenden Ansprüche, **dadurch gekennzeichnet, dass** eine Berührung (C) zwischen dem Fahrzeug (1) und der Laderampe (7) als Annäherungs-Zustand (ZA) ermittelt wird, wenn festgestellt wird, dass
- die Fahrzeug-Beschleunigung (A) einen festgelegten Beschleunigungs-Grenzwert (A1) und/oder
- ein Fahrzeug-Ruck (J) einen festgelegten Ruck-Grenzwert (J1) erreicht oder betragsmäßig überschreitet, wobei der Fahrzeug-Ruck (J) aus der Fahrzeug-Beschleunigung (A) durch zeitliches Ableiten folgt.

7. Verfahren nach Anspruch 6, **dadurch gekennzeichnet, dass** der Beschleunigungs-Grenzwert (A1) und/oder der Ruck-Grenzwert (J1) und/oder die Annäherungs-Geschwindigkeit (V1) in Abhängigkeit von Annäherungs-Informationen (I) aus mindestens einem vorangegangenen Annäherungsvorgang (G) angepasst wird oder werden.

8. Verfahren nach Anspruch 7, **dadurch gekennzeichnet, dass** ein selbstlernender Algorithmus (B) den Beschleunigungs-Grenzwert (A1) und/oder den Ruck-Grenzwert (J1) und/oder die Annäherungs-Geschwindigkeit (V1) in Abhängigkeit der Annäherungs-Informationen (I) aus mindestens einem vorangegangenen Annäherungsvorgang (G) selbstlernend anpasst.

9. Verfahren nach einem der vorhergehenden Ansprüche, **dadurch gekennzeichnet, dass** das Ermitteln des Annäherungs-Zustandes (ZA) (ST5) erst dann erfolgt, wenn die Fahrzeug-Geschwindigkeit (V) auf die Annäherungs-Geschwindigkeit (V1) begrenzt wurde (ST3).

10. Verfahren nach einem der vorhergehenden Ansprüche, **dadurch gekennzeichnet, dass** ferner überwacht wird, ob sich das Fahrzeug (1) im Stillstand (H) befindet, und der Annäherungs-Zustand (ZA) in Abhängigkeit davon ermittelt wird, ob sich das Fahrzeug (1) im Stillstand (H) befindet,
wobei eine Berührung (C) zwischen dem Fahrzeug (1) und der Laderampe (7) als Annäherungs-Zustand (ZA) ermittelt wird, wenn der Stillstand (H) des Fahrzeuges (1) festgestellt wird.

11. Verfahren nach Anspruch 10, **dadurch gekennzeichnet, dass** bei einem Feststellen des Stillstandes (H) des Fahrzeuges (1) erst dann eine Berührung (C) zwischen dem Fahrzeug (1) und der Laderampe (7) als Annäherungs-Zustand (ZA) ermittelt wird, wenn
- auch die zeitlich überwachte Fahrzeug-Beschleunigung (A) auf eine Berührung (C) zwischen dem Fahrzeug (1) und der Laderampe (7) hinweist und/oder
- sich die Fahrzeug-Geschwindigkeit (V) trotz einer Erhöhung eines Motordrehmomentes (M) infolge des Feststellens des Stillstandes (H) nicht verändert.

12. Verfahren nach einem der vorhergehenden Ansprüche, **dadurch gekennzeichnet, dass** das Fahrzeug (1) durch Betriebsbremsen (25a) und/oder Feststellbremsen (25b) im Stillstand (H) gehalten wird, wenn als Annäherungs-Zustand (ZA) eine Berührung (C) des Fahrzeuges (1) mit der Laderampe (7) ermittelt wurde (ST6).

13. Verfahren nach Anspruch 12, **dadurch gekennzeichnet, dass** das Fahrzeug (1) zunächst durch die Betriebsbremsen (25a) im Stillstand (H) gehalten wird und die Bremskraft anschließend auf die Feststellbremsen (25b) verlagert wird.

14. Verfahren nach einem der vorhergehenden Ansprüche, **dadurch gekennzeichnet, dass** die Fahrzeug-Geschwindigkeit (V) nach dem Begrenzen der Fahrzeug-Geschwindigkeit (V) auf die Annäherungs-Geschwindigkeit (V1) über einen Geschwindigkeitssensor (16) und/oder einen Drehzahl-Sensor (18a) in einem Getriebe (18) eines Antriebssystems (17) des Fahrzeuges (1) überwacht wird.

15. Steuereinrichtung (100) für ein Fahrzeug (1) zur Durchführung eines Verfahrens nach einem der vorhergehenden Ansprüche, wobei die Steuereinrichtung (100) mit einem Beschleunigungssensor (19) signalleitend verbindbar ist und ausgebildet ist,
- eine Fahrzeug-Geschwindigkeit (V) des Fahrzeuges (1) derartig zu begrenzen, dass das Fahrzeug (1) bei einer Annäherung an eine Laderampe (7) eine festgelegte Annäherungs-Geschwindigkeit (V1) nicht überschreitet;
- eine von dem Beschleunigungssensor (19) gemessene Fahrzeug-Beschleunigung (A) über die Zeit (T) zu überwachen;
- einen Annäherungs-Zustand (ZA) in Abhängigkeit der zeitlich überwachten Fahrzeug-Beschleunigung (A) zu ermitteln, wobei der Annäherungs-Zustand (ZA) angibt, ob eine Berührung (C) zwischen dem Fahrzeug (1) und der Laderampe (7) erfolgt ist oder nicht; und
- das Fahrzeug (1) in den Stillstand (H) zu bringen und/oder im Stillstand (H) zu halten, wenn als Annäherungs-Zustand (ZA) eine Berührung (C) des Fahrzeuges (1) mit der Laderampe (7) ermittelt wurde.

16. Fahrzeug (1) mit einem Bremssystem (25), einem Antriebssystem (17) und einer Steuereinrichtung (100) nach Anspruch 15, wobei das Fahrzeug (1) einen Beschleunigungssensor (19) aufweist, wobei der Beschleunigungssensor (19) ausgebildet ist, eine Fahrzeug-Beschleunigung (A) des Fahrzeuges (1) zu erfassen,
wobei die Steuereinrichtung (100) signalleitend mit dem Beschleunigungssensor (19) verbunden ist zum Übertragen der gemessenen Fahrzeug-Beschleunigung (A) auf die Steuereinrichtung (100), und
die Steuereinrichtung (100) ferner ausgebildet ist,
- das Antriebssystem (17) anzusteuern zum Begrenzen der Fahrzeug-Geschwindigkeit (V) auf die Annäherungsgeschwindigkeit (V1) und
- das Bremssystem (25) anzusteuern zum Bringen des Fahrzeuges (1) in den Stillstand (H) und/oder zum Halten des Fahrzeuges (1) im Stillstand (H), wenn als Annäherungs-Zustand (ZA) eine Berührung (C) des Fahrzeuges (1) mit einer Laderampe (7) ermittelt wurde.

## Claims

1. Method for having a vehicle (1) approach a loading ramp (7), wherein the vehicle (1) has an acceleration sensor (19), wherein the acceleration sensor (19) is designed to detect a vehicle acceleration (A) of the vehicle (1), comprising at least the following steps:
- limiting a vehicle speed (V) of the vehicle (1) such that the vehicle (1) does not exceed a specified approach speed (V1) when approaching the loading ramp (7) (ST3);
- monitoring, over time (T), the vehicle acceleration (A) measured by the acceleration sensor (19) (ST4);
- determining an approach state (ZA) depending on the vehicle acceleration (A) monitored over time, wherein the approach state (ZA) indicates whether or not contact (C) has occurred between the vehicle (1) and the loading ramp (7) (ST5); and
- bringing the vehicle (1) to a standstill (H) and/or holding the vehicle (1) at a standstill (H) if contact (C) of the vehicle (1) with the loading ramp (7) has been determined as the approach state (ZA) (ST6).

2. Method according to claim 1, **characterized in that** when the vehicle (1) approaches the loading ramp (7), an actual distance (D0) between the vehicle (1) and the loading ramp (7) is determined (ST1).

3. Method according to claim 2, **characterized in that** the vehicle speed (V) is limited (ST3) as soon as the determined actual distance (D0) falls below a specified approach distance (D1) (ST2) when the vehicle (1) approaches the loading ramp (7).

4. Method according to claim 2 or claim 3, **characterized in that** the actual distance (D0) between the vehicle (1) and the loading ramp (7) is determined using a position detection system (15) and/or an environment detection system (13), which has, for example, an ultrasonic sensor (13a) and/or a radar sensor (13b) and/or a LIDAR sensor (13c) and/or a camera (13d).

5. Method according to any of claims 2 to 4, **characterized in that** determining the approach state (ZA) to ascertain whether or not contact (C) has occurred between the vehicle (1) and the loading ramp (7) (ST5) does not depend on the determined actual distance (D0) between the vehicle (1) and the loading ramp (7).

6. Method according to any of the preceding claims, **characterized in that** contact (C) between the vehicle (1) and the loading ramp (7) is determined as an approach state (ZA) if it is ascertained that
- the vehicle acceleration (A) reaches or exceeds a specified acceleration limit value (A1) and/or
- a vehicle jolt (J) reaches or exceeds a specified jolt limit value (J1), the vehicle jolt (J) resulting from the vehicle acceleration (A) by temporal derivation.

7. Method according to claim 6, **characterized in that** the acceleration limit value (A1) and/or the jolt limit value (J1) and/or the approach speed (V1) is or are adjusted depending on approach information (I) from at least one previous approach process (G).

8. Method according to claim 7, **characterized in that** a self-learning algorithm (B), by self-learning, adapts the acceleration limit value (A1) and/or the jolt limit value (J1) and/or the approach speed (V1) depending on the approach information (I) from at least one previous approach process (G).

9. Method according to any of the preceding claims, **characterized in that** determining the approach state (ZA) (ST5) only occurs if the vehicle speed (V) has been limited to the approach speed (V1) (ST3).

10. Method according to any of the preceding claims, **characterized in that** it is further monitored whether the vehicle (1) is at a standstill (H), and the approach state (ZA) is determined depending on whether the vehicle (1) is at a standstill (H),
contact (C) between the vehicle (1) and the loading ramp (7) being determined as an approach state (ZA) if a standstill (H) of the vehicle (1) is detected.

11. Method according to claim 10, **characterized in that** when a standstill (H) of the vehicle (1) is ascertained, contact (C) between the vehicle (1) and the loading ramp (7) is only determined as an approach state (ZA) if
- the vehicle acceleration (A) monitored over time also indicates contact (C) between the vehicle (1) and the loading ramp (7) and/or
- the vehicle speed (V) does not change despite an increase in engine torque (M) as a result of ascertaining a standstill (H).

12. Method according to any of the preceding claims, **characterized in that** the vehicle (1) is held at a standstill (H) by service brakes (25a) and/or parking brakes (25b) if contact (C) of the vehicle (1) with the loading ramp (7) has been determined as the approach state (ZA) (ST6).

13. Method according to claim 12, **characterized in that** the vehicle (1) is initially held at a standstill (H) by the service brakes (25a) and the braking force is then transferred to the parking brakes (25b).

14. Method according to any of the preceding claims, **characterized in that** the vehicle speed (V) is monitored, after the vehicle speed (V) has been limited to the approach speed (V1), via a speed sensor (16) and/or via a rotational speed sensor (18a) in a transmission (18) of a drive system (17) of the vehicle (1).

15. Control device (100) for a vehicle (1), for carrying out a method according to any of the preceding claims, wherein the control device (100) can be connected to an acceleration sensor (19) in a signal-conducting manner and is designed
- to limit a vehicle speed (V) of the vehicle (1) such that the vehicle (1) does not exceed a specified approach speed (V1) when approaching a loading ramp (7);
- to monitor, over time (T), a vehicle acceleration (A) measured by the acceleration sensor (19);
- to determine an approach state (ZA) depending on the vehicle acceleration (A) monitored over time, wherein the approach state (ZA) indicates whether or not contact (C) has occurred between the vehicle (1) and the loading ramp (7); and
- to bring the vehicle (1) to a standstill (H) and/or to hold it at a standstill (H) if contact (C) of the vehicle (1) with the loading ramp (7) has been determined as the approach state (ZA).

16. Vehicle (1) comprising a braking system (25), a drive system (17) and a control device (100) according to claim 15, wherein the vehicle (1) has an acceleration sensor (19), wherein the acceleration sensor (19) is designed to detect a vehicle acceleration (A) of the vehicle (1), wherein the control device (100) is connected to the acceleration sensor (19) in a signal-conducting manner for transmitting the measured vehicle acceleration (A) to the control device (100), and the control device (100) is further designed
- to control the drive system (17) to limit the vehicle speed (V) to the approach speed (V1) and
- to control the braking system (25) to bring the vehicle (1) to a standstill (H) and/or to hold the vehicle (1) at a standstill (H) if contact (C) of the vehicle (1) with a loading ramp (7) has been determined as the approach state (ZA).

## Revendications

1. Procédé permettant à un véhicule (1) d'approcher une rampe de chargement (7), dans lequel le véhicule (1) présente un capteur d'accélération (19), dans lequel le capteur d'accélération (19) est conçu pour détecter une accélération de véhicule (A) du véhicule (1), comportant au moins les étapes suivantes :
- limitation d'une vitesse de véhicule (V) du véhicule (1) de telle sorte que le véhicule (1) ne dépasse pas une vitesse d'approche (V1) définie lorsqu'il s'approche de la rampe de chargement (7) (ST3) ;
- surveillance, dans le temps (T), de l'accélération de véhicule (A) mesurée par le capteur d'accélération (19) (ST4) ;
- détermination d'un état d'approche (ZA) en fonction de l'accélération de véhicule (A) surveillée dans le temps, dans lequel l'état d'approche (ZA) indique si un contact (C) a eu lieu ou non entre le véhicule (1) et la rampe de chargement (7) (ST5) ; et
- amenée du véhicule (1) à l'arrêt (H) et/ou maintien du véhicule (1) à l'arrêt (H) lorsqu'un contact (C) du véhicule (1) avec la rampe de chargement (7) a été déterminé comme état d'approche (ZA) (ST6).

2. Procédé selon la revendication 1, **caractérisé en ce que** lorsque le véhicule (1) s'approche de la rampe de chargement (7), une distance réelle (D0) entre le véhicule (1) et la rampe de chargement (7) est déterminée (ST1).

3. Procédé selon la revendication 2, **caractérisé en ce que** la vitesse de véhicule (V) est limitée (ST3) dès que, lors de l'approche du véhicule (1) de la rampe de chargement (7), la distance réelle (D0) déterminée est inférieure à une distance d'approche (D1) définie (ST2).

4. Procédé selon la revendication 2 ou 3, **caractérisé en ce que** la distance réelle (D0) entre le véhicule (1) et la rampe de chargement (7) est déterminée à l'aide d'un système de détection de position (15) et/ou d'un système de détection d'environnement (13), qui présente par exemple un capteur à ultrasons (13a) et/ou un capteur radar (13b) et/ou un capteur LIDAR (13c) et/ou une caméra (13d).

5. Procédé selon l'une des revendications 2 à 4, **caractérisé en ce que** la détermination de l'état d'approche (ZA) pour établir si un contact (C) a eu lieu ou non (ST5) entre le véhicule (1) et la rampe de chargement (7) n'est pas effectuée en fonction de la distance réelle (D0) déterminée entre le véhicule (1) et la rampe de chargement (7).

6. Procédé selon l'une des revendications précédentes,
**caractérisé en ce qu'**un contact (C) entre le véhicule (1) et la rampe de chargement (7) est déterminé comme étant un état d'approche (ZA) lorsqu'il est établi que
- l'accélération de véhicule (A) atteint ou dépasse en valeur absolue une valeur limite d'accélération (A1) définie et/ou
- une secousse de véhicule (J) atteint ou dépasse en valeur absolue une valeur limite de secousse (J1) définie, dans lequel la secousse de véhicule (J) résulte de l'accélération de véhicule (A) par dérivation temporelle.

7. Procédé selon la revendication 6, **caractérisé en ce que** la valeur limite d'accélération (A1) et/ou la valeur limite de secousse (J1) et/ou la vitesse d'approche (V1) est ou sont adaptées en fonction d'informations d'approche (I) provenant d'au moins une opération d'approche (G) précédente.

8. Procédé selon la revendication 7, **caractérisé en ce qu'**un algorithme d'auto-apprentissage (B) adapte de manière auto-apprenante la valeur limite d'accélération (A1) et/ou la valeur limite de secousse (J1) et/ou la vitesse d'approche (V1) en fonction des informations d'approche (I) provenant d'au moins une opération d'approche (G) précédente.

9. Procédé selon l'une des revendications précédentes,
**caractérisé en ce que** la détermination de l'état d'approche (ZA) (ST5) n'est effectuée que lorsque la vitesse de véhicule (V) a été limitée (ST3) à la vitesse d'approche (V1).

10. Procédé selon l'une des revendications précédentes,
**caractérisé en ce que** l'on surveille en outre si le véhicule (1) est à l'arrêt (H), et l'on détermine l'état d'approche (ZA) en fonction du fait que le véhicule (1) est à l'arrêt (H),
dans lequel un contact (C) entre le véhicule (1) et la rampe de chargement (7) est déterminé comme état d'approche (ZA) lorsque l'arrêt (H) du véhicule (1) est établi.

11. Procédé selon la revendication 10, **caractérisé en ce que**, lorsque l'arrêt (H) du véhicule (1) est établi, un contact (C) entre le véhicule (1) et la rampe de chargement (7) n'est déterminé comme état d'approche (ZA) que lorsque
- l'accélération de véhicule (A) surveillée dans le temps indique également un contact (C) entre le véhicule (1) et la rampe de chargement (7) et/ou
- la vitesse de véhicule (V) ne change pas malgré une augmentation d'un couple moteur (M) à la suite de l'établissement de l'arrêt (H).

12. Procédé selon l'une des revendications précédentes,
**caractérisé en ce que** le véhicule (1) est maintenu à l'arrêt (H) par des freins de service (25a) et/ou des freins de stationnement (25b) lorsqu'un contact (C) du véhicule (1) avec la rampe de chargement (7) a été déterminé (ST6) comme état d'approche (ZA).

13. Procédé selon la revendication 12, **caractérisé en ce que** le véhicule (1) est d'abord maintenu à l'arrêt (H) par les freins de service (25a) et la force de freinage est ensuite transférée aux freins de stationnement (25b).

14. Procédé selon l'une des revendications précédentes,
**caractérisé en ce qu'**après avoir limité la vitesse de véhicule (V) à la vitesse d'approche (V1), la vitesse de véhicule (V) est surveillée par l'intermédiaire d'un capteur de vitesse (16) et/ou d'un capteur de vitesse de rotation (18a) dans une boîte de vitesses (18) d'un système d'entraînement (17) du véhicule (1).

15. Dispositif de commande (100) pour un véhicule (1), destiné à la mise en œuvre d'un procédé selon l'une des revendications précédentes, dans lequel le dispositif de commande (100) peut être relié à un capteur d'accélération (19) par conduction de signaux, et est conçu pour
- limiter une vitesse de véhicule (V) du véhicule (1) de telle sorte que le véhicule (1) ne dépasse pas une vitesse d'approche (V1) définie lorsqu'il s'approche d'une rampe de chargement (7) ;
- surveiller une accélération de véhicule (A) mesurée par le capteur d'accélération (19) dans le temps (T) ;
- déterminer un état d'approche (ZA) en fonction de l'accélération de véhicule (A) surveillée dans le temps, dans lequel l'état d'approche (ZA) indique si un contact (C) a eu lieu ou non entre le véhicule (1) et la rampe de chargement (7) ; et
- amener le véhicule (1) à l'arrêt (H) et/ou le maintenir à l'arrêt (H) lorsqu'un contact (C) du véhicule (1) avec la rampe de chargement (7) a été déterminé comme état d'approche (ZA).

16. Véhicule (1) comportant un système de freinage (25), un système d'entraînement (17) et un dispositif de commande (100) selon la revendication 15, dans lequel le véhicule (1) présente un capteur d'accélération (19), dans lequel le capteur d'accélération (19) est conçu pour détecter une accélération de véhicule (A) du véhicule (1), dans lequel le dispositif de commande (100) est relié par conduction de signaux au capteur d'accélération (19) pour transmettre l'accélération de véhicule (A) mesurée au dispositif de commande (100), et le dispositif de commande (100) est en outre conçu pour
- commander le système d'entraînement (17) dans le but de limiter la vitesse de véhicule (V) à la vitesse d'approche (V1) et
- commander le système de freinage (25) dans le but d'amener le véhicule (1) à l'arrêt (H) et/ou de maintenir le véhicule (1) à l'arrêt (H) lorsqu'un contact (C) du véhicule (1) avec une rampe de chargement (7) a été déterminé comme état d'approche (ZA).
